# EUROPEAN PATENT SPECIFICATION

(11) **EP 3 520 964 B1**
(45) Date of publication and mention of the grant of the patent: **14.12.2022**
(21) Application number: 17855753.4
(22) Date of filing: 14.09.2017
(51) Int. Cl.: B24C 1/04, B22F 3/16, B24C 3/32, B24C 11/00, B33Y 40/00, B33Y 80/00, B24C 1/08

(54) **SURFACE TREATMENT METHOD FOR METALLIC THREE-DIMENSIONAL PRODUCTS**
OBERFLÄCHENBEHANDLUNGSVERFAHREN FÜR METALLISCHE DREIDIMENSIONALE ERZEUGNISSE
PROCÉDÉ DE TRAITEMENT DE SURFACE DE PRODUITS TRIDIMENSIONNELS MÉTALLIQUES

(30) Priority: 28.09.2016 JP 2016189160
(43) Date of publication of application: 07.08.2019
(73) Proprietor: Sintokogio, Ltd., Nagoya-shi, Aichi 450-6424 (JP)
(72) Inventor: KIBAYASHI, Hideyuki, Toyokawa-shi, Aichi 441-1205 (JP); SAKAI, Shigekazu, Toyokawa-shi, Aichi 441-1205 (JP)
(74) Representative: Müller-Boré & Partner Patentanwälte PartG mbB
(86) International application number: PCT/JP2017/033243
(87) International publication number: WO 2018/061797

(56) References cited:
- EP-A1- 3 438 462
- CA-A1- 2 969 505
- JP-A- 2015 532 893
- JP-A- 2016 153 212
- JP-A- 2016 155 208
- JP-A- 2016 155 208
- JP-A- 2017 180 178
- US-A1- 2012 180 539

## Description

### Technical Field

The present invention relates to a surface treatment method for a metallic three-dimensional product, and more particularly relates to a surface treatment method of removing surface defects of the metallic three-dimensional product manufactured by a three-dimensional modeling method.

### Background of the Art

A casting and a forging have long been known as manufacturing methods for metallic three-dimensional products. These manufacturing methods are suitable for producing relatively large-size three-dimensional products in large quantities. On the other hand, they are unsuitable for manufacturing three-dimensional products whose shape might be modified, since a mold such as a casting mold is required in order to perform molding in a desired shape. Additionally, the shapes and sizes of the three-dimensional products that can be manufactured by the casting or the forging were limited. Further, as for structures having complicated shapes, there were cases where it was necessary to perform cutting process after the molding by the casting or the forging.

Dealing with such problems, a three-dimensional solid modeling method has been attracting attention, in which method metal powder of a raw material is successively laminated in layer being cured.

However, in the three-dimensional products obtained by the three-dimensional solid modeling method, there are problems of surface defects such as steps (or difference in level) between adjacent layers (lamination marks), surface roughness, pinholes, and lack of gloss.

As a treatment method for removing surface defects on the three-dimensional product manufactured by the three-dimensional modeling method, is known a treatment method for removing level differences between adjacent layers on a three-dimensional product by injecting an abrasive to the three-dimensional product (see Patent Document 1). However, since the method disclosed in patent document 1 was a treatment method for a three-dimensional product made from epoxy resin by a three-dimensional stereolithography, such treatment method had had a problem that it cannot be used for metal products without any improvement.

EP 3 438 462 A1 describes a method for producing an impeller by FDM (fused deposition modelling) and a method for polishing walls of a channel formed in the impeller.

JP 2016 155208 A, which represents the closest prior art, describes an inert gas circulation type blasting apparatus for ejecting shot material onto a workpiece and performing surface grinding.

CA 2 969 595 A1 describes a polishing method including accelerating abrasive grains toward a workpiece.

US 2012/180539 A1 describes a method of shot-peening treatment of a steel product.

### List of Prior Art Document

### Patent Document

Patent Document 1
Japanese Patent Laid-Open Publication No. 11-179661

### Summary of the Invention

### Problem to be Solved

The present invention has been made in view of the above-mentioned problems, and it is an object of the present invention to provide a surface treatment method of removing the surface defects of a metallic three-dimensional product manufactured by the three-dimensional modeling method.

### Means for Solving the Problem

The invention is defined by the subject-matter of the independent claim. Preferred embodiments are subject-matter of the dependent claims.

According to the present invention,
is provided a surface treatment method of removing surface defects of a metallic three-dimensional product manufactured by a three-dimensional modeling method, comprising steps of:
providing the three-dimensional product; and
injecting a first injecting material toward a surface of the three-dimensional product so as to hit against the surface,
wherein the first injecting material is particles having corners, and the level difference between layers of a three-dimensional product surface is removed by the corners.

According to another preferred embodiment of the present invention,
the first injecting material is particles other than metals.

According to another preferred embodiment of the present invention,
the first injecting material is metallic particles on a surface of which particle an oxide film is not formed.

According to the present invention, the Vickers hardness of the first injecting material is Hv 2000 to 2500, and the collision energy at the time when the first injecting material hit against the surface is 2.9×10⁻⁸ to 6.2×10⁻⁶J; or
the Vickers hardness of the first injecting material is Hv 500 to 800, and the collision energy at the time when the first injecting material hit against the surface is 1.0×10⁻⁶ to 3.2×10⁻⁵J; or
the Vickers hardness of the first injecting material is Hv 50 to 200, and the collision energy at the time when the first injecting material hit against the surface is 1.0×10⁻⁴ to 1.2×10⁻³J.

According to another preferred embodiment of the present invention,
further including the step of
injecting a second injecting material toward the surface to be treated of the three-dimensional product,
wherein the second injecting material is particles without corners.

According to another preferred embodiment of the present invention,
the Vickers hardness of the second injecting material is Hv 500 to 800, and the collision energy at the time when the second injecting material hit against a surface to be treated is 9.6×10⁻⁸ to 3.1×10⁻⁶J.

According to another preferred embodiment of the present invention,
further including the steps of:
generating an air flow toward under the three-dimensional product; and
straightening, by the air flow, the first injecting material injected toward the surface to be treated from above the three-dimensional product.

### Effect of the Invention

According to the present invention, there is provided the surface treatment method of removing the surface defects of the metallic three-dimensional product manufactured by the three-dimensional modeling method.

### Brief Description of Drawings

[Figure 1] Figure 1 is a diagram showing a schematic configuration of a surface treatment apparatus used in a surface treatment method for a metallic three-dimensional product of a preferred embodiment of the present invention.
[Figure 2] Figure 2 is a flowchart of the surface treatment method for the metallic three-dimensional product of the preferred embodiment of the present invention.
[Figure 3] Figure 3 is a schematic diagram showing the correlation between collision energies in respective conditions of the surface treatment method for the metallic three-dimensional product of the preferred embodiment of the present invention.
[Figure 4] Figure 4 is a perspective view showing the external appearance of a workpiece (metallic three-dimensional product) subjected to surface treatment in an example of the present invention.

### Description of Embodiments

Referring to the drawings, a surface treatment method for a metallic three-dimensional product of a preferred embodiment of the present invention will be described below. Up, down, left and right directions in this specification designate the directions in the drawings unless otherwise indicated.

### (Surface Treatment Apparatus)

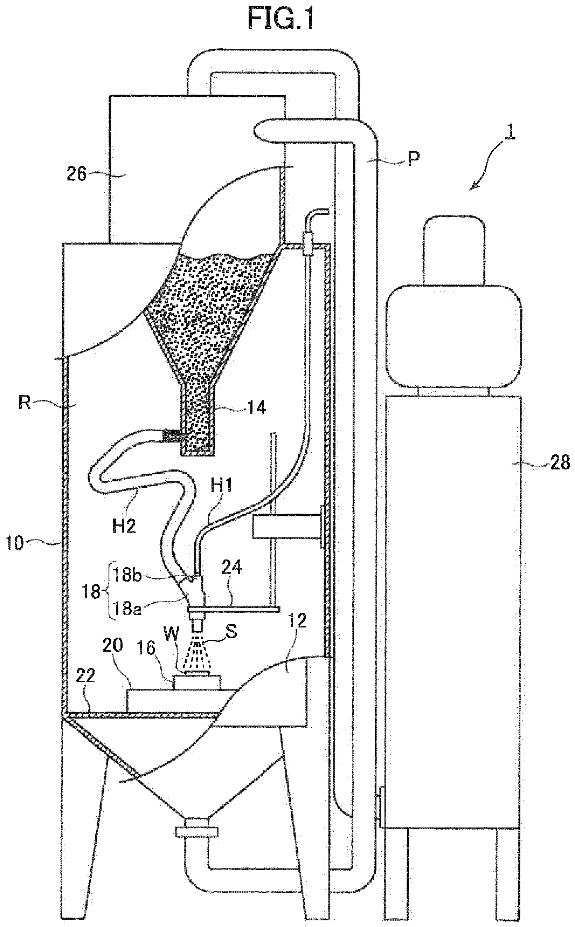

First, the configuration of a surface treatment apparatus 1 used in the surface treatment method for the metallic three-dimensional product of the preferred embodiment of the present invention will be explained. Figure 1 is a diagram showing the configuration of the surface treatment apparatus 1.

The surface treatment apparatus 1 is a processing apparatus in which a injecting material is injected onto a surface of the metallic three-dimensional product manufactured by the three-dimensional modeling method such that surface treatment is performed therein. The surface treatment apparatus 1 includes a housing 10 inside which a processing chamber R for processing a workpiece W is provided. The housing 10 has a door 12, and an operator opens this door 12 and carries-in/carries-out the workpiece W into/from the processing chamber R.

A storage hopper 14 for storing a injecting material, a processing table 16 on which the workpiece W subjected to surface treatment is placed, and a nozzle 18 for injecting the injecting material towards the workpiece W placed on the processing table 16 are provided inside the processing chamber R.

The processing table 16 is placed on a moving mechanism 20 comprising a publicly known mechanism such as an X-Y stage, and is configured to be freely movable in an X direction and a Y direction by the operation of the moving mechanism 20. As a result, the workpiece W placed on the processing table 16 can be arranged to a desired position within a horizontal plane by the moving mechanism 20.

Additionally, the moving mechanism 20 is arranged on a stand 22 arranged at the lowermost part of the processing chamber R. This stand 22 comprises a tabular member in which many holes are formed, and is configured to allow passing of powder objects, such as a injecting material injected from the nozzle 18 and hits against a surface of the workpiece W, and a metal powder constituting the workpiece W and scraped from the surface of the workpiece W due to the collision with (or hit against) the injecting material.

The nozzle 18 is arranged via a fixing jig 24 so as to face the workpiece W placed on the processing table 16. Additionally, the fixing jig 24 is configured to be able to freely adjust the distance between the nozzle 18 and the workpiece W.

The nozzle 18 comprises a nozzle holder 18a, and an air nozzle 18b inserted into this nozzle holder 18a. The air nozzle 18b is in fluid communication with a compressor (not shown) via an air hose H1, and the nozzle holder 18a is in fluid communication with the storage hopper 14 via a injecting material hose H2.

When the compressor is actuated to inject compressed air from the air nozzle 18b, the injecting material is sucked into the air nozzle 18b via the nozzle holder 18a by the negative pressure generated in the air nozzle 18b due to the flow of the compressed air, and the injecting material is mixed with the compressed air within the air nozzle 18b to form a solid/gas two-phase flow S, which is injected towards the workpiece W placed on the processing table 16.

Note that, in this embodiment, though a suction type nozzle is adopted as the nozzle 18, a direct pressure type nozzle may be adopted.

A separating mechanism 26 comprising a cyclone type classifier is provided above the storage hopper 14 arranged at the top part of the processing chamber R. The separating mechanism 26 is configured to communicate with a bottom space (a lower space of the stand 22) of the processing chamber R via a transport pipe P, and to introduce the injecting material injected to the workpiece W for reuse. Note that, in this embodiment, though the cyclone type classifier is used as the separating mechanism 26, other wind-force type classifier or screen type classifier may be used.

The separating mechanism 26 has the function to remove the dust and the like unsuitable for injecting from the injecting material introduced into the storage hopper 14. Specifically, it is configured to separate the dust and the like from the used injecting material introduced through the transport pipe P from the bottom space of the processing chamber R, and to supply only the reusable injecting material to the storage hopper 14 for reuse.

The surface treatment apparatus 1 of this embodiment also include a suction mechanism 28 for sucking the inside of the separating mechanism 26. By sucking the inside of the separating mechanism 26 with this suction mechanism 28, the injecting material injected to the workpiece W, and the dust and the like generated by the collision of the injecting material with the workpiece W will be introduced into the separating mechanism 26 via the transport pipe P from the bottom space (the lower space of the stand 22) of housing 10.

The surface treatment apparatus 1 of this embodiment includes a control mechanism (not shown) for controlling respective mechanisms such as the separating mechanism 26 and the suction mechanism 28, and the operation of the apparatus. As the control mechanism, various arithmetic units such as a personal computer, motion controllers such as a programmable logic controller (PLC) and a digital signal processor (DSP), a sophisticated personal digital assistant, a sophisticated mobile phone and the like are used.

### (First Embodiment)

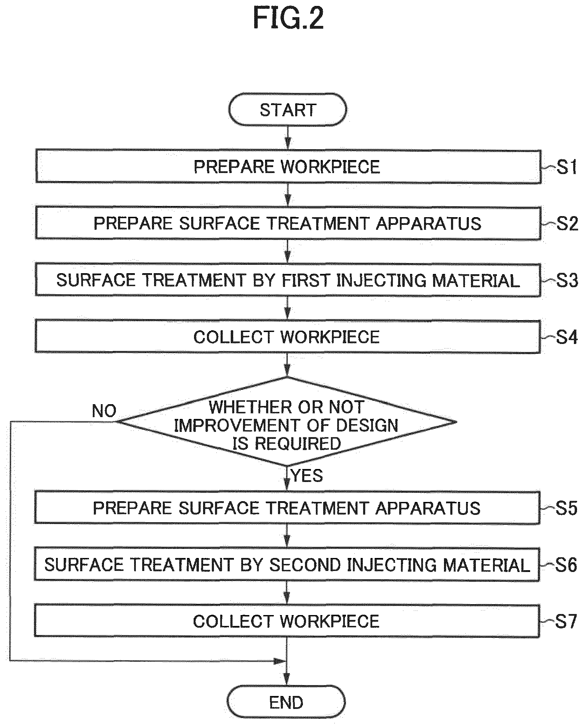

Next, referring to the flowchart of Figure 2, the surface treatment method of the first embodiment of the present invention using the surface treatment apparatus 1 will be described below.

### <S1: Preparing workpiece >

The workpiece W that is subjected to the surface treatment by the surface treatment method of this embodiment is a metallic three-dimensional product manufactured by laminating aluminum powder in layers while curing the aluminum powder in a known three-dimensional modeling method. Lines, which are lamination marks, remain on a surface of the workpiece W, and roughness is also observed on the entire surface thereof.

### <S2: Preparing surface treatment apparatus>

The suction mechanism 28 is actuated, and the processing chamber R is sucked. Then, the door 12 is opened, a predetermined amount of a first injecting material is fed into the processing chamber R, and the first injecting material is transported to the storage hopper 14 via the transport pipe P and the separating mechanism 26. Since the processing chamber R is being sucked by the suction mechanism 28 via the separating mechanism 26, the processing chamber R becomes a negative pressure, and the external air flows into the processing chamber R from a suction hole (not shown) provided for communication with the outside.

In this embodiment, the first injecting material has corners. Since the injecting material has corners, the lamination marks of the workpiece W are efficiently removed. However, the injecting material without corners may be used.

"Have corners" means that the injecting material includes acute angle corners or obtuse angle corners, and is not formed by a circular, so-called rounded surface. Additionally, as the shape of the injecting material, various kinds of shapes including an anisotropic shape, a cylindrical shape, square-column shape, and an isometric part may be listed.

As the material for the first injecting material, it is preferable to select a material that does not affect the physical property of the workpiece.

"Affect the physical property of the workpiece" means the state where the material of the surface of the injecting material is transferred onto the workpiece, and the surface of the workpiece is coated with the transferred object. Note that "the coated state" includes the state where the surfaced of the workpiece is partially coated (that is, the state where the transferred object is scattered over the workpiece surface) in addition to the state where the surface of the workpiece is entirely coated.

When the material forming the injecting material is transferred to the workpiece, it is difficult to remove the transferred object from the workpiece by cleaning. Additionally, the design (appearance) of the workpiece is lost (changed) by the transfer of the material of the injecting material to the workpiece. Transferred object may become a cause of malfunction depending on the kind of the workpiece, when the workpiece is mounted on a product, since the transferred object is impurity for the workpiece. Such problems are avoidable by the above features.

The first injecting material is properly selected from, for example, ceramics particles (an alumina system, a silicon carbide system, a zircon system, etc.), the particles of a genuine stone (emery, silica stone, diamond, etc.), plant-based particles (husks of walnuts, seeds of peaches, seeds of apricots, etc.), resin particles (nylon, melamine, urea, etc.) and the like. By using particles other than metals, it is possible to prevent the state where the surface of the workpiece is coated with a different metal.

Additionally, when selecting a metallic particle, it is preferable to select the metallic particle in which an oxide film is not formed. This is because, when the oxide film is formed on the surface of the first injecting material, the oxide film may adhere to the workpiece W, depending on the physical property of the workpiece W.

"The oxide film is not formed" includes not only the case where the oxide film is not completely formed, but also includes the case where the film is formed to such an extent that the oxide film is not transferred to the workpiece W at the time of surface treatment.

Additionally, in the surface treatment method of this embodiment, since it is necessary to know the mass of the particles constituting the first injecting material, it is preferable to use the first injecting material constituted by particles whose actual specific gravity is known. Further, the actual specific gravity of the particles may be measured in advance by a known method such as the pycnometer method.

Next, an electromagnetic valve (not shown) of the surface treatment apparatus 1 provided in a path for supplying the compressed air to a nozzle 50 is opened, and the compressed air is supplied to the nozzle 18. By supplying the compressed air to the nozzle 18, the first injecting material contained in the storage hopper 14 is sucked into the nozzle 18 by a compressed air flow, and is injected towards the workpiece W from a tip of the nozzle 18.

Here, the inject speed of the first injecting material is adjusted to be a desired speed. For example, the correlation among the physical property (the kind, the particle diameter, etc.) of the injecting material, the inject pressure, and the inject speed is measured in advance, and based on the result, the inject pressure is adjusted to be a desired inject speed. In this embodiment, the speed of the injecting material at the position where the workpiece is set (the position immediately before the injecting material hit against the workpiece) was measured by the Particle Image velocimetry (PIV) in association with the physical property of the injecting material and the inject pressure.

The "inject pressure" is the numerical value measured with a manometer that is arranged between a compressed air supply source and the nozzle. In this embodiment, the inject pressure is controlled so that the desired inject speed is obtained by operating a inject valve based on the correlation between the inject pressure and the inject speed measured in advance.

After adjusting the inject pressure so that the desired inject speed is obtained, the electromagnetic valve provided in the path for supplying the compressed air to the nozzle 50 is closed, and the injecting of the first injecting material is stopped.

Then, the door 12 is opened, and the workpiece W is placed and fixed on the processing table 16. Thereafter, the fixing jig 22 is operated to adjust the distance between the nozzle 18 and the workpiece W, and the door 12 is closed.

In this embodiment, the workpiece W is moved with respect to the nozzle so that the injecting material is injected on the entire surface of the workpiece, and a required surface treatment is performed. The surface treatment conditions, such as the moving path, the moving speed, and the number of times of scanning of the workpiece W, are input to the control mechanism so that the workpiece W moves as described above.

### <S3: Surface treatment by first injecting material>

Then, the electromagnetic valve provided in the path for supplying the compressed air to the nozzle 50 is opened, and the first injecting material is injected towards the workpiece W. Then, a moving mechanism 14 is actuated, and the processing table 16 on which the workpiece W is placed, and the workpiece W placed on the processing table 16 are horizontally moved toward a predetermined position under the nozzle 18.

When the workpiece W moves to the predetermined position under the nozzle 18, the first injecting material hits against the workpiece. At this moment, the lamination marks on the surface of the workpiece W are removed by the corners of the first injecting material.

When the shapes and hardness of the particles of the first injecting material, and the collision energy of the first injecting material to the work are not appropriately set, the lamination marks may be insufficiently removed, or the surface of the workpiece W may be cut too much.

It is possible to perform a good surface treatment when one of the conditions in Table 1 is selected, though it varies with the shape of the workpiece. Note that the Vickers hardness in Table 1 is the Vickers hardness of the particles forming the first injecting material, and is the value measured in conformity with JIS Z2244:2009.

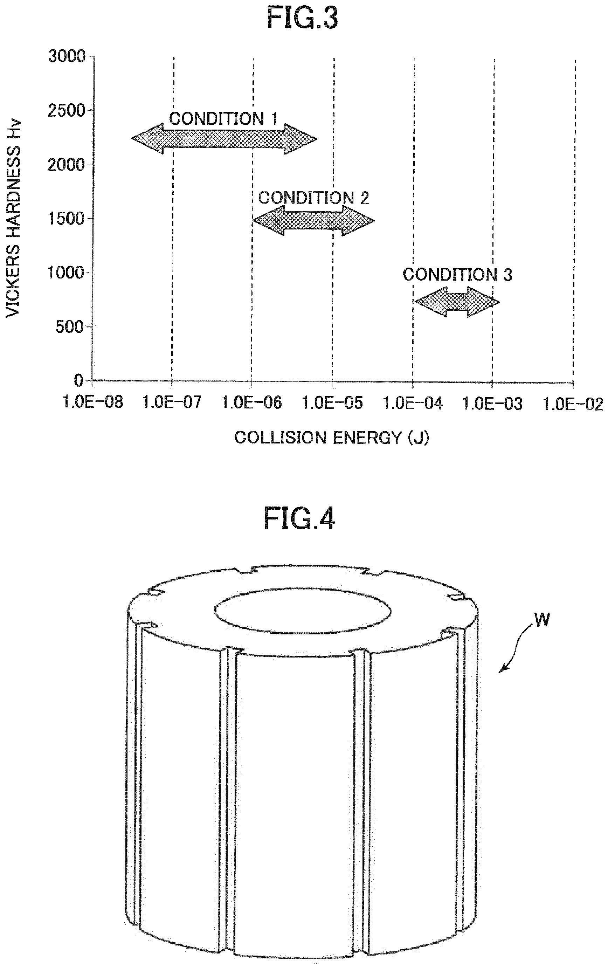

Additionally, the collision energy is the energy per particle of the injecting material, and can be calculated based on the weight of individual particles constituting the first injecting material, and the speed of these particles immediately before the collision with the workpiece.
Further, Figure 3 shows the numerical value ranges for the Vickers hardness and the collision energy under respective conditions.

**[Table 1]**

| | Vickers hardness (Hv) | collision energy (J) |
|---|---|---|
| Condition 1 | 2,000-2,500 | 2.9×10⁻⁸-6.2×10⁻⁶ |
| Condition 2 | 500-800 | 1.0×10⁻⁶-3.2×10⁻⁵ |
| Condition 3 | 50-200 | 1.0×10⁻⁴-1.2×10⁻³ |

Note that the collision energy E of this embodiment is calculated by the following formula 1, where the true specific gravity of the injecting material is p, the average particle diameter of the injecting material is L, and the speed of the injecting material immediately before the collision to the workpiece is v.
[Formula 1] $E = \frac{1}{12} \times ρ \times π \times {L}^{3} \times {v}^{2}$

Here, the calculation is performed by converting the shape of the injecting material into a spherical form whose particle diameter is L.

The surface treatment of the condition 1 is suitable for the surface treatment of the workpiece having a surface with a relatively large minute irregularities (for example, the surface roughness Ra specified by JIS B0601:2001 is equal to or more than 5.0 µm).

The first injecting material used in the condition 1 has a strong cutting force, removes the lines that are the lamination marks, and can cut the workpiece surface so as to make the surface roughness small. As for the first injecting material having this hardness, fused alumina particles and silicon carbide particles can be listed, for example. Then, the surface treatment is performed by adjusting the property and the inject speed of the first injecting material, so that the collision energy falls within the range of the condition 1. Here, the average particle diameter d50 of the first injecting material may be selected from 15 to 75 µm, for example.

The surface treatment of the condition 2 is suitable for the surface treatment of the workpiece having a surface with a relatively small roughness (for example, the surface roughness Ra specified by JIS B0601:2001 is 1.0 to 5.0 µm).

As for the first injecting material having the hardness of the condition 2, soda-lime glass particles and zircon particles can be listed, for example. Then, the surface treatment is performed by adjusting the property and the inject speed of the first injecting material, so that the collision energy falls within the range of the condition 2. Here, the average particle diameter d50 of the first injecting material may be selected from 60 to 300 µm, for example.

The surface treatment of the condition 3 is suitable for the surface treatment of the workpiece having a complicated shape, and requiring a high dimensional accuracy.

As the complicated-shape workpiece, the workpiece having irregularity and corners, the workpiece having a three dimensionally complicated shape and the like can be listed. Additionally, as the workpiece requiring a high dimensional accuracy, the workpiece constituting a sliding part, airplane parts, the parts for precision equipment and the like can be listed.

Since the Vickers hardness of the first injecting material used in the condition 3 is low, when the first injecting material hits against the workpiece, the first injecting material itself is transformed, and the damage to the workpiece W is reduced. However, since the particles of the first injecting material include corners, the particles of the first injecting material can gradually remove the lamination marks. As the first injecting material having the hardness of the condition 3, for example, particles obtained by crushing the seeds of apricots, melamine resin, urea resin, and the like can be listed, and the surface treatment is performed by adjusting the property and the inject speed of the first injecting material so that the collision energy falls within the range of the condition 3. Here, the average particle diameter d50 of the first injecting material may be selected from 400 to 600 µm, for example.

The air flow toward a bottom part (that is, below the workpiece W) is generated inside of the processing chamber R by the suction mechanism 40. Although the flow of the first injecting material injected from the nozzle 50 tries to spread in the entire processing chamber R, the flow of the first injecting material is straighten in the direction toward below the workpiece W by this air flow. As a result, since the quantity of the first injecting material contacting the workpiece W is increased, the surface treatment can be efficiently performed. Additionally, since the speed of the first injecting material is increased by the air flow toward the bottom part (that is, below the workpiece W), the collision energy of the first injecting material to the workpiece W is increased, and the surface treatment can be efficiently performed.

The first injecting material after injecting, and the dust generated by the surface treatment (the cutting dust of the workpiece, and the first injecting material that was broken, etc. by the collision) are transported to the separating mechanism 26 by suction in the separating mechanism 26 by the suction mechanism 28. These first injecting material and dust are divided into the reusable first injecting material and the dust by the separating mechanisms 26.

The reusable first injecting material is supplied to the storage hopper 14, and thereafter is transported to the nozzle 18 and injected again. On the other hand, the light weight dust is sucked by the suction mechanism 28, and are caught by a catching filter (not shown) provided in the suction mechanism 28.

### <S4: Collect workpiece>

When a predetermined processing of the workpiece W is completed, the operation of the moving means 14 is stopped, the electromagnetic valve provided in the path for supplying the compressed air to the nozzle 50 is closed, and the operation of the surface treatment apparatus is stopped. Thereafter, the operator opens the door 12, and collects the workpiece W. Further, the first injecting material and the dust adhering to the workpiece W are removed as needed.

In case a rear surface of the workpiece needs to be processed, the operator turns the workpiece around, and the injecting material is injected to the rear side of the workpiece. Alternatively, the injecting material may be injected to the rear surface of the workpiece by other methods.

The above steps S1 to S4 correspond to the surface treatment method of the first embodiment of the present invention.

### (Second embodiment)

A second embodiment of the present invention is the surface treatment method in which a second surface treatment by a second injecting material is additionally performed to the workpiece W processed by the surface treatment method of the above-described first embodiment, when the design improvement by glossiness improvement, surface roughness adjustment, etc. on the surface of the workpiece is required. Accordingly, in the second embodiment, steps S5 to S7 are added after the processing similar to steps S1 to S4 of the above-described first embodiment.

### <S5: Prepare surface treatment apparatus>

The surface treatment apparatus is prepared as in the above-described S2.

### <S6: Surface treatment by second injecting material>

It is preferable that the second injecting material used in the second surface treatment comprises particles without corners. Here, "without corners" includes either of a curved surface whose corners are rounded, and a generally curved surface. Additionally, it may be a substantially spherical form particle, which is one form of the latter.

Further, as in the case of the first injecting material, selection may be performed by taking into consideration of the possibility of affecting the physical property of the workpiece.

It is preferable that the second injecting material having a Vickers hardness of Hv 500 to 800 is used, and the collision energy at the time when the second injecting material hits against a surface to be treated is 9.6×10⁻⁸ to 3.1×10⁻⁶J, since the design of the workpiece can be satisfactorily improved. Here, the average particle diameter d50 of the second injecting material may be selected from 45 to100 µm, for example.

For the other aspects, the operation similar to that in the above-described S3 is performed. The irregularity on the workpiece surface is removed since the second injecting material hits against the workpiece W. Since the second injecting material does not have corners, the surface to be processed of the workpiece surface becomes smooth, leading to the design improvement.

### <S7: Collect workpiece>

The operation similar to that of the above-described S4 is performed.

### [Examples]

Next, a result of performing the surface treatment of the workpiece by the surface treatment method, which is an example of the present invention will be described below.

A three-dimensional product W (Figure 4) made of aluminum powder and molded into a substantially cylindrical shape was used as the workpiece. This three-dimensional product W has a φ 20mm × 50mm cylindrical shape with eight grooves extending in a longitudinal direction. Lines extending in the longitudinal direction, which are the lamination marks, are formed on the surface of the three-dimensional product, and roughness is observed in the entire surface.

In Examples 1 to 6, the surface treatments were performed only by the first injecting material, and in Examples 7 and 8, the surface treatments were performed by the second injecting material after the surface treatment by the first injecting material.

The workpiece on which the surface treatment was performed was observed with a microscope, and whether or not the lamination marks were removed was confirmed. The evaluation criteria were as follows.
○: The lamination marks are removed.
Δ: Although the level difference of the lamination marks is not confirmed, a line is confirmed as a design.
×: The lamination marks are not removed.

Additionally, the glossiness was visually evaluated by illuminating from above. The evaluation criteria were as follows.
○: The glossiness is high.
Δ: Although reflection of light is confirmed, it is a little dark.
×: There is no reflection of light.

Further, the smoothness was evaluated by the operator with his/her hand. The evaluation criteria were as follows.
○: It is smooth.
Δ: When it is stroked by a hand, there is no discomfort, but there is a little feeling of roughness.
×: There is a feeling of resistance when it is stroked by a hand.

The result is shown in Table 2.

### (1) Removal of Lamination Marks

Examples 1, 2, 4 and 6 were the O evaluations, and Examples 3 and 5 were the Δ evaluations. Since the Δ evaluation is a deterioration of evaluation to a degree that does not cause a problem at practical level, it was found that the lamination marks can be satisfactorily removed in the ranges of the conditions 1 to 3 in Table 1. In particular, it was suggested that the conditions 1 is more advantageous to remove the lamination marks.

### (2) Glossiness

Examples 3, 4 and 5 were the O evaluations, and Examples 1, 2 and 6 were the Δ evaluations. Since the Δ evaluation is a deterioration of evaluation to a degree that does not cause a problem at practical level, it was found that the glossiness is obtained in the workpiece in the ranges of the conditions 1 to 3 in Table 1. In particular, it was suggested that the condition 2 is more advantageous to improve the glossiness.

### (3) Smoothness

Examples 4, 5 and 6 were the O evaluations, and Examples 1, 3 and 4 were the Δ evaluations. Since the Δ evaluation is a deterioration of evaluation to a degree that does not cause a problem at practical level, it was found that the glossiness is obtained in the workpiece in the ranges of the conditions 1 to 3 in Table 1. In particular, it was suggested that the condition 3 is more advantageous to improve the smoothness. Further, it was suggested that the surface treatment by the second injecting material is effective for improving the smoothness of the workpiece surface, since each of Examples 7 and 8 that performed the surface treatment by the second injecting material was the O evaluation.

In Comparative Examples 1 to 6 that do not satisfy the conditions 1 to 3 in Table 1, one of the evaluations was x evaluation. Additionally, when the first injecting material was made into a spherical form (Comparative Example 7), it was suggested that the capability to remove the lamination marks is insufficient.

Further, a description will be given of the effect of the surface treatment by the second injecting material. In each of Examples 7 and 8 that performed the surface treatment by the second injecting material after performing the surface treatment in the condition 1 in which each of the evaluations of glossiness and smoothness was the Δ evaluation, all evaluations become the ○ evaluation. It was suggested that the surface treatment by the second injecting material is advantageous to improve the glossiness and smoothness of the workpiece surface, and is effective for improving the design.

In the surface treatment by the second injecting material, when the above-mentioned range (Hv 500 to 800, and the collision energy at the time when the second injecting material hit against the surface to be treated is 9.6×10⁻⁸ to 3.1×10⁻⁶J) is not satisfied, in Comparative Example 7 that is less than this range, the evaluation of glossiness and smoothness became the Δ evaluation, and in Comparative Example 8 that exceeds this range, the evaluation of smoothness became the Δ evaluation. This suggests that the effect of the surface preparation by the second injecting material is not fully obtained. Additionally, in Comparative Examples 10 that made the second injecting material into an anisotropic shape, the evaluations of glossiness and smoothness were both x, and it was suggested that the design was deteriorated by this surface treatment.

**[Table 2]**

| | Processing Conditions | | | | | | Results | | |
|---|---|---|---|---|---|---|---|---|---|
| | Surface Treatment by 1st Injecting material | | | Surface Treatment by 2nd Injecting material | | | Remov al of Lamina tion Marks | Glossin ess | Smoot hness |
| | Injecting material | | Collision Energy (J) | Injecting material | | Collision Energy (J) | | | |
| | Hardness (Hv) | Shape | | Hardness (Hv) | Shape | | | | |
| Example 1 | 2250 | Anisotro pic | 3.0×10⁻⁸ | - | - | - | ○ | Δ | Δ |
| Example 2 | 2250 | Anisotro pic | 6.0×10⁻⁶ | - | - | - | ○ | Δ | Δ |
| Example 3 | 550 | Anisotro pic | 1.3×10⁻⁶ | - | - | - | Δ | ○ | Δ |
| Example 4 | 550 | Anisotro pic | 3.0×10⁻⁵ | - | - | - | ○ | ○ | ○ |
| Example 5 | 120 | Anisotro pic | 1.2×10⁻⁴ | - | - | - | Δ | ○ | ○ |
| Example 6 | 120 | Anisotro pic | 1.0×10⁻³ | - | - | - | ○ | Δ | ○ |
| Example 7 | 2250 | Anisotro pic | 1.0×10⁻⁶ | 550 | Spheri cal | 9.8×10⁻⁸ | ○ | ○ | ○ |
| Example 8 | 2250 | Anisotro pic | 1.0×10⁻⁶ | 550 | Spheri cal | 2.9×10⁻⁶ | ○ | ○ | ○ |
| Comparative Example 1 | 2250 | Anisotro pic | 2.0×10⁻⁸ | - | - | - | Δ | × | × |
| Comparative Example 2 | 2250 | Anisotro pic | 7.5×10⁻⁶ | - | - | - | ○ | × | × |
| Comparative Example 3 | 550 | Anisotro pic | 9.5×10⁻⁷ | - | - | - | × | Δ | × |
| Comparative Example 4 | 550 | Anisotro pic | 4.3×10⁻⁵ | - | - | - | ○ | × | Δ |
| Comparative Example 5 | 120 | Anisotro pic | 9.5×10⁻⁵ | - | - | - | × | × | × |
| Comparative Example 6 | 120 | Anisotro pic | 2.1×10⁻³ | - | - | - | ○ | Δ | × |
| Comparative Example 7 | 550 | Spheric al | 2.1×10⁻³ | - | - | - | × | Δ | Δ |
| Comparative Example 8 | 2250 | Anisotro pic | 1.0×10⁻⁶ | 550 | Spheri cal | 9.8×10⁻⁸ | ○ | Δ | Δ |
| Comparative Example 9 | 2250 | Anisotro pic | 1.0×10⁻⁶ | 550 | Spheri cal | 3.7×10⁻⁶ | ○ | ○ | Δ |
| Comparative Example 10 | 2250 | Anisotro pic | 1.0×10⁻⁶ | 550 | Anisotr opic | 8.2×10⁻⁷ | ○ | × | × |

### Reference Signs List

- 1: surface treatment apparatus
- 10: housing
- 12: door
- 14: storage hopper
- 16: processing table
- 18: nozzle
- 18a: nozzle holder
- 18b: air nozzle
- 20: moving mechanism
- 22: stand
- 24: fixing jig
- 26: separating mechanism
- W: workpiece
- R: processing chamber
- P: transport pipe
- H1: air hose
- H2: injecting material hose

## Claims

1. A surface treatment method for removing surface defects of a metallic three-dimensional product manufactured by a three-dimensional modeling method, the surface treatment method comprising the steps of:
providing the three-dimensional product; and
injecting a first injecting material toward a surface of the three-dimensional product so as to hit against the surface,
wherein the first injecting material is particles having corners, and the level difference between layers of a three-dimensional product surface is removed by the corners; **characterised in that**:
the Vickers hardness of the first injecting material measured in conformity with JIS Z2244:2009 is Hv 2000 to 2500, and
the collision energy at the time when the first injecting material hits against the surface is 2.9×10⁻⁸ to 6.2×10⁻⁶J; or
the Vickers hardness of the first injecting material measured in conformity with JIS Z2244:2009 is Hv 500 to 800, and
the collision energy at the time when the first injecting material hit against the surface is 1.0×10⁻⁶ to 3.2×10⁻⁵J; or
the Vickers hardness of the first injecting material measured in conformity with JIS Z2244:2009 is Hv 50 to 200, and the collision energy at the time when the first injecting material hit against the surface is 1.0×10⁻⁴ to 1.2×10⁻³J.

2. The surface treatment method according to claim 1,
wherein the first injecting material is particles other than metals.

3. The surface treatment method according to claim 1,
wherein the first injecting material is metallic particles on whose surface an oxide film is not formed.

4. The surface treatment method according to any one of claims 1 to 3, further comprising the step of:
injecting a second injecting material toward the surface to be treated of the three-dimensional product,
wherein the second injecting material is particles without corners.

5. The surface treatment method according to claim 4,
wherein the Vickers hardness of the second injecting material is Hv 500 to 800, and the collision energy at the time when the second injecting material hit against the surface is 9.6 10-8 to 3.1 10-6J.

6. The surface treatment method according to any one of claims 1 to 5, further comprising the steps of:
generating an air flow toward under the three-dimensional product; and
straightening , by the air flow, the first injecting material injected toward the surface to be treated from above the three-dimensional product.

## Patentansprüche

1. Oberflächenbehandlung zum Entfernen von Oberflächendefekten eines metallischen, dreidimensionalen Erzeugnisses, das mittels eines dreidimensionalen Modellierungsverfahrens hergestellt wird, wobei das Oberflächenbehandlungsverfahren die folgenden Schritte umfasst:
Bereitstellen des dreidimensionalen Erzeugnisses; und
Einspritzen eines ersten Einspritzmaterials in Richtung einer Oberfläche des dreidimensionalen Erzeugnisses, so dass es auf die Oberfläche trifft,
wobei es sich bei dem ersten Einspritzmaterial um Partikel mit Ecken handelt, und der Höhenunterschied zwischen Schichten einer Oberfläche des dreidimensionalen Erzeugnisses durch die Ecken verschwindet;
**dadurch gekennzeichnet, dass**:
die Vickershärte des ersten Einspritzmaterials, die gemäß dem JIS Z2244:2009 gemessen wird, Hv 2000 bis 2500 beträgt, und
die Aufprallenergie zu dem Zeitpunkt, wenn das erste Einspritzmaterial auf die Oberfläche trifft, 2,9 × 10⁻⁸ bis 6,2 × 10⁻⁶J beträgt; oder
die Vickershärte des ersten Einspritzmaterial, die gemäß dem JIS Z2244:2009 gemessen wird, Hv 500 bis 800 beträgt, und
die Aufprallenergie zu dem Zeitpunkt, wenn das erste Einspritzmaterial auf die Oberfläche trifft, 1,0 × 10⁻⁶ bis 3,3 × 10⁻⁵J beträgt; oder
die Vickershärte des ersten Einspritzmaterials, die gemäß JIS Z2244:2009 gemessen wird, Hv 50 bis 200 beträgt, und
die Aufprallenergie zu dem Zeitpunkt, wenn das erste Einspritzmaterial auf die Oberfläche trifft, 1,0 × 10⁻⁴ bis 1,2 × 10⁻³J beträgt.

2. Oberflächenbehandlungsverfahren nach Anspruch 1,
wobei es sich bei dem ersten Einspritzmaterial um Partikel handelt, die keine Metalle sind.

3. Oberflächenbehandlungsverfahren nach Anspruch 1,
wobei es sich bei dem ersten Einspritzmaterial um metallische Partikel handelt, auf deren Oberflächen kein Oxidfilm ausgebildet ist.

4. Oberflächenbehandlungsverfahren nach einem der Ansprüche 1 bis 3, ferner umfassend den Schritt:
Einspritzen eines zweiten Einspritzmaterials in Richtung der zu behandelnden Oberfläche des dreidimensionalen Erzeugnisses,
wobei es sich bei dem zweiten Einspritzmaterial um Partikel ohne Ecken handelt.

5. Oberflächenbehandlungsverfahren nach Anspruch 4,
wobei die Vickershärte des zweiten Einspritzmaterials Hv 500 bis 800 beträgt, und die Aufprallenergie zu dem Zeitpunkt, wenn das zweite Einspritzmaterial auf die Oberfläche trifft, 9,6 × 10⁻⁸ bis 3,1 × 10⁻⁶ J beträgt.

6. Oberflächenbehandlungsverfahren nach einem der Ansprüche 1 bis 5, ferner umfassend die Schritte:
Erzeugen eines Luftstroms unter dem dreidimensionalen Erzeugnis; und
Glätten des ersten Einspritzmaterials, das in Richtung der zu behandelnden Oberfläche von oberhalb des dreidimensionalen Erzeugnisses eingespritzt wird, mittels des Luftstroms.

## Revendications

1. Procédé de traitement de surface pour éliminer des défauts de surface d'un produit tridimensionnel métallique fabriqué au moyen d'un procédé de modélisation tridimensionnelle, le procédé de traitement de surface comprenant les étapes de :
la fourniture du produit tridimensionnel ; et
l'injection d'un premier matériau d'injection vers une surface du produit tridimensionnel, afin de heurter la surface,
le premier matériau d'injection comprenant des particules dotées de coins, et la différence de niveau entre des couches d'une surface du produit tridimensionnel étant éliminée à l'aide des coins ;
**caractérisé en ce que** :
la dureté Vickers du premier matériau d'injection, mesurée conformément à JIS Z2244:2009, est comprise entre 2000 et 2500 HV, et
l'énergie de collision, au moment où le premier matériau d'injection heurte la surface, est comprise entre 2,9 × 10⁻⁸ et 6,2 × 10⁻⁶ J ; ou
la dureté Vickers du premier matériau d'injection, mesurée conformément à JIS Z2244:2009, est comprise entre 500 et 800 HV, et
l'énergie de collision, au moment où le premier matériau d'injection heurte la surface, est comprise entre 1,0 × 10⁻⁶ et 3,2 × 10⁻⁵ J ; ou
la dureté Vickers du premier matériau d'injection, mesurée conformément à JIS Z2244:2009, est comprise entre 50 et 200 HV, et
l'énergie de collision, au moment où le premier matériau d'injection heurte la surface, est comprise entre 1,0 × 10⁻⁴ et 1,2 × 10⁻³ J.

2. Le procédé de traitement de surface selon la revendication 1,
dans lequel le premier matériau d'injection sont des particules autres que des métaux.

3. Le procédé de traitement de surface selon la revendication 1,
dans lequel le premier matériau d'injection comprend sont des particules métalliques, sur la surface desquelles un film d'oxyde n'est pas formé.

4. Le procédé de traitement de surface selon l'une quelconque des revendications 1 à 3, comprenant en outre l'étape de :
l'injection d'un second matériau d'injection vers la surface à traiter du produit tridimensionnel,
le second matériau d'injection étant des particules sans coins.

5. Le procédé de traitement de surface selon la revendication 4,
dans lequel la dureté Vickers du second matériau d'injection est comprise entre 500 et 800 HV, et l'énergie de collision au moment où le second matériau d'injection heurte la surface est comprise entre 9,6 × 10⁻⁸ à 3,1 × 10⁻⁶ J.

6. Le procédé de traitement de surface selon l'une quelconque des revendications 1 à 5, comprenant en outre les étapes de :
la production d'un écoulement d'air vers le dessous du produit tridimensionnel ; et
le redressage, à l'aide de l'écoulement d'air, du premier matériau d'injection injecté vers la surface à traiter à partir du dessus du produit tridimensionnel.
